# EUROPÄISCHE PATENTSCHRIFT

(11) **EP 3 983 251 B1**
(45) Veröffentlichungstag und Bekanntmachung des Hinweises auf die Patenterteilung: **27.03.2024**
(21) Anmeldenummer: 20725529.0
(22) Anmeldetag: 12.05.2020
(51) Int. Cl.: B60K 35/00

(54) **ANZEIGESYSTEM FÜR EIN KRAFTFAHRZEUG**
DISPLAY SYSTEM FOR A MOTOR VEHICLE
SYSTÈME D'AFFICHAGE POUR UN VÉHICULE AUTOMOBILE

(30) Priorität: 13.06.2019 DE 102019116084
(43) Veröffentlichungstag der Anmeldung: 20.04.2022
(73) Patentinhaber: Bayerische Motoren Werke Aktiengesellschaft, 80809 München (DE)
(72) Erfinder: EICHHORN, Julian, Menlo Park, California 94025 (US); STERN, Jasper, 81925 München (DE)
(86) Internationale Anmeldenummer: PCT/EP2020/063138
(87) Internationale Veröffentlichungsnummer: WO 2020/249344

(56) Entgegenhaltungen:
- DE-A1-102015 225 343
- FR-A1- 3 056 773
- JP-A- 2010 120 501
- US-A1- 2013 241 747

## Beschreibung

### Technisches Gebiet

Die Erfindung betrifft Anzeigesysteme für Kraftfahrzeuge zur bildlichen Darstellung von fahr- und fahrzeugrelevanten Informationen, Navigations-, Kommunikations- und/oder Medieninformationen.

### Technischer Hintergrund

In Kraftfahrzeugen ist eine Vielzahl von Anzeigeeinrichtungen installiert, die als einfache Leuchtsymbole, als Zeigerinstrumente oder als Bildschirmanzeigen ausgebildet sein können. Die Anzeigeeinrichtungen sind in geeigneter Weise platziert, um dem Fahrer ein schnellstmögliches Erfassen der zu übermittelnden Informationen zu ermöglichen.

Durch das Vorsehen von Projektionsanzeigeeinrichtungen, wie beispielsweise eine Head-up-Display-Anzeigeeinrichtung, ist es zudem möglich, ein Symbol oder eine Bildinformation in das Auge des Fahrers zu projizieren. Dabei wird eine Combiner-Fläche, insbesondere in Form einer Reflexionsfläche auf der Windschutzscheibe, zur Reflexion eines projizierten Lichtstrahlenbündels aus der Projektionseinrichtung verwendet, so dass das darzustellende Bild durch den Fahrer erfasst werden kann, ohne die Blickrichtung zu ändern. Projektionseinrichtungen für Head-up-Display-Anzeigen benötigen jedoch einen erheblichen Bauraum, und insbesondere bei Kraftfahrzeugen geringerer Größe ist es schwierig, eine großflächige Anzeige in Form eines Head-up-Displays zu realisieren, da der dafür notwendige Bauraum im Inneren des Armaturenbretts fehlt.

Die Druckschrift US 2013/241747 A1 offenbart eine Fahrzeuginformationsübertragungsvorrichtung, die eine Lichtquelle, die dazu konfiguriert ist, basierend auf einem von der Berechnungseinheit berechneten Ergebnis ein Vorhandensein eines gefährlichen Objekts als Information an einen Fahrer zu übertragen; und eine Beleuchtungssteuereinheit aufweist, die dazu konfiguriert ist, einen Beleuchtungsmodus der Lichtquelle zu steuern.

Die Druckschrift DE 10 2015 225343 A1 offenbart eine Anordnung für ein Fortbewegungsmittel umfassend eine Innenraumverkleidung, eine Vielzahl in die Innenraumverkleidung eingelassener lichtemittierender Dioden, eine Auswerteeinheit, wobei die Auswerteeinheit eingerichtet ist, einem Insassen des Fortbewegungsmittels mittels der LEDs einen richtungsanalogen Hinweis auf ein Umgebungsdetail auszugeben.

Die Druckschrift FR 3056773A1 offenbart eine Fahrhilfevorrichtung für ein Kraftfahrzeug, umfassend Projektionsmittel, das LEDs aufweisen kann, zum Bilden von Lichtmarkierungen auf einer Projektionsfläche des Fahrzeugs, ein Erfassungsmittel eines Elements einer Straßenszene, eine Verarbeitungseinheit zum Bestimmen einer Position des Elements der Straßenszene relativ zu dem Fahrzeug, ein Steuermodul zum Konfigurieren des Projektionsmittels, um mindestens einen Teil der Lichtstrahlen zu emittieren, wobei die Lichtmarkierungen, die durch die von den Projektionsmitteln emittierten Lichtstrahlen gebildet werden, in der Nähe der Position des Elements der Straßenszene angeordnet werden, wie sie von einem Insassen des Fahrzeugs durch die Projektionsfläche wahrgenommen wird.

Die Druckschrift JP2010 120501 A offenbart eine Vorrichtung zum Unterstützen der Blickführung eines Fahrers in einem Führungsraum eines Fahrzeugs, wobei die Vorrichtung auf einer Oberfläche eines Armaturenbretts des Fahrzeugs so angeordnet ist, dass sie einer Windschutzscheibe des Fahrzeugs zugewandt ist, und eine Vielzahl von Punktlichtquellen (z.B. LEDs) aufweist, die selektiv auf die Windschutzscheibe projiziert werden. Mithilfe einer Anzeigesteuerungseinrichtung werden die Punktlichtquellen, gesteuert, um eine Sichtlinien-Führungsunterstützung zu realisieren.

Die Druckschrift US2013/241747 A1 offenbart eine Fahrzeuginformationsübertragungsvorrichtung, die Informationen in einem Modus mit Änderungen überträgt, umfassend eine Erfassungseinheit, die so konfiguriert ist, dass sie ein Objekt und Informationen in einer äußeren Umgebung, die ein eigenes Fahrzeug umgibt, erfasst, eine Berechnungseinheit, die so konfiguriert ist, dass sie auf der Grundlage des Objekts und der von der Erfassungseinheit erfassten Informationen einen Gefährdungsgrad in der Umgebung des eigenen Fahrzeugs berechnet, eine Lichtquelle, die so konfiguriert ist, dass sie das Vorhandensein eines gefährlichen Objekts als Information an einen Fahrer auf der Grundlage eines von der Berechnungseinheit berechneten Ergebnisses übermittelt; und eine Beleuchtungssteuereinheit, die konfiguriert ist, um einen Beleuchtungsmodus der Lichtquelle zu steuern. Die Beleuchtungssteuereinheit ändert einen Variationsbetrag des Modus pro Einheitsänderung gemäß einer relativen Verzögerung, einer relativen Geschwindigkeit oder einer relativen Beschleunigung des von der Erfassungseinheit erfassten Objekts zu dem eigenen Fahrzeug.

Es ist Aufgabe der vorliegenden Erfindung, ein Anzeigesystem für ein Kraftfahrzeug bereitzustellen, das einen geringen Bauraum aufweist und eine große Anzeigefläche bereitstellt.

### Offenbarung der Erfindung

Diese Aufgabe wird durch das Anzeigesystem nach Anspruch 1 gelöst.

Weitere Ausgestaltungen sind in den abhängigen Ansprüchen angegeben.

Gemäß einem ersten Aspekt ist ein Anzeigesystem für ein Kraftfahrzeug mit einer Anzeigeeinrichtung mit einem oder mehreren Anzeigeelementen vorgesehen, die auf einer Oberseite eines Armaturenbretts angeordnet sind, so dass ein Anzeigebild an einem Reflexionsbereich in einen Augenbereich eines Fahrers und/oder eines weiteren Fahrzeuginsassen reflektiert wird, wobei das eine oder die mehreren Anzeigeelemente als Mikro-LED-Anzeige ausgebildet sind.

Die Anzeigeelemente grenzen an eine untere Kante der Windschutzscheibe an, wobei die Anzeigeelemente eine rechteckige Fläche aufweisen, so dass jedes der Anzeigeelemente mit mindestens einer Ecke an der Windschutzscheibe angrenzt oder gleichermaßen von dieser beabstandet ist. Insbesondere kann die rechteckige Fläche zur Längsrichtung des Kraftfahrzeugs ausgerichtet sein.

Weiterhin ist eine Steuereinheit ausgebildet, die Helligkeit der Anzeige der Anzeigeelemente individuell abhängig von einer Umgebungshelligkeit eines Ausschnitts der Fahrzeugumgebung einzustellen, so dass die Wahrnehmung der Anzeige jedes der Anzeigeelemente, die den entsprechenden Ausschnitt der Fahrzeugumgebung überlagert, möglich ist.

Eine Idee des obigen Anzeigesystems besteht darin, flache Anzeigeeinrichtungen an der Oberseite des Armaturenbretts anzuordnen, so dass ein Fahrer des Kraftfahrzeugs und ggfs. andere Fahrzeuginsassen die Anzeige der flächigen Anzeigeeinrichtungen über eine Reflexion an der Windschutzscheibe wahrnimmt.

Herkömmliche flächige Anzeigeeinrichtungen, wie beispielsweise eine LCD-Anzeigeeinrichtung, sind jedoch deutlich zu leuchtschwach, um auch bei hellen Umgebungsbedingungen eine wahrnehmbare Darstellungshelligkeit zu erreichen. So kann ein Fahrer bei Sonneneinstrahlung an der Windschutzscheibe reflektierte Abbildungen kaum wahrnehmen.

Daher ist vorgesehen, die Anzeigeeinrichtung als Mikro-LED-Anzeigeeinrichtung, die durch Feldanordnung von einzeln ansteuerbaren Mikro-LED-Elementen aufgebaut sind, auszubilden, die hinsichtlich ihrer Anzeigeauflösung und Bildpunkthelligkeit für den Einsatz in dem erfindungsgemäßen Anzeigesystem geeignet sind. Die Verwendung einer Mikro-LED-Anzeigeeinrichtung ermöglicht es somit, eine leuchtstarke Abbildung auszugeben, die von einem Fahrer als Reflexionsbild auf der Windschutzscheibe auch bei Sonneneinstrahlung wahrnehmbar ist.

Die Anzeigeeinrichtung umfasst mehrere einzelne Anzeigeelemente, die aneinander angrenzend angeordnet sind, um eine Bildfläche des anzuzeigenden Anzeigebilds zu vergrößern. Durch die Anordnung der Anzeigeelemente der Anzeigeeinrichtung möglichst nahe an der unteren Kante der Windschutzscheibe ermöglicht, dass die Darstellung des reflektierten Anzeigebilds so weit wie möglich auf dem unteren Bereich der Windschutzscheibe erfolgt. Aufgrund der Krümmung der Windschutzscheibe in horizontaler Ebene kann dies zu einer versetzten Anordnung von einzelnen Anzeigeelementen der Anzeigeeinrichtung führen, die jeweils mit mindestens einer Ecke an die untere Kante der Windschutzscheibe anstoßen.

Insbesondere kann eine Steuereinheit ausgebildet sein, die Anzeige der Anzeigeelemente so zu formen, dass das reflektierte Anzeigebild auf der Windschutzscheibe mit einem geradlinigen unteren Rand dargestellt wird.

Es kann vorgesehen sein, dass eine Steuereinheit ausgebildet ist, die Anzeigeelemente selektiv zu aktivieren.

### Kurzbeschreibung der Zeichnungen

Ausführungsformen werden nachfolgend anhand der beigefügten Zeichnungen näher erläutert. Es zeigen:
- Figur 1: eine schematische Querschnittsdarstellung durch ein Kraftfahrzeug zur Veranschaulichung der Anordnung der Anzeigeeinrichtung auf einer Oberseite des Armaturenbretts; und
- Figur 2: eine Anordnung von Anzeigeelementen der Anzeigeeinrichtung auf der Oberseite des Armaturenbretts mit Bezug zur unteren Kante der Windschutzscheibe;
- Figur 3: eine Draufsicht auf die Anzeigeeinrichtung gemäß einer weiteren Ausführungsform; und
- Figur 4: eine Draufsicht auf die Anzeigeeinrichtung gemäß einer weiteren Ausführungsform.

### Beschreibung von Ausführungsformen

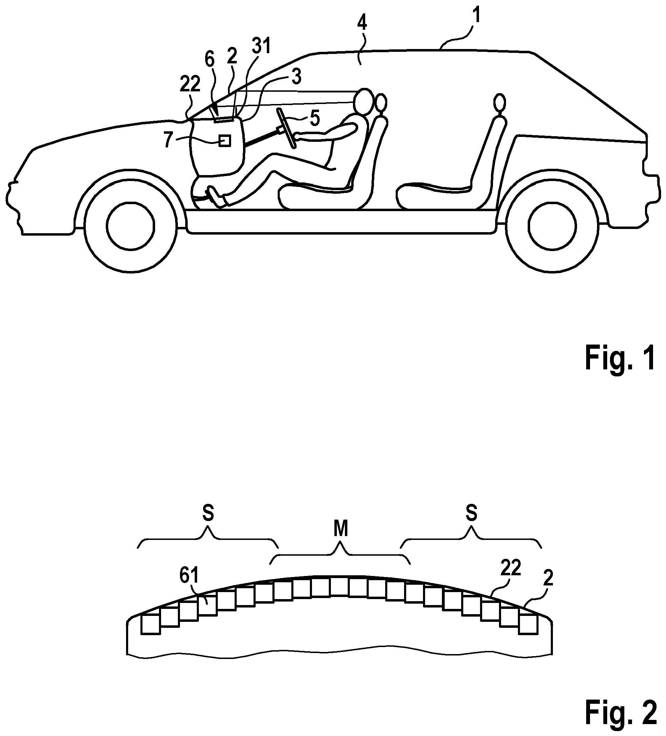

Figur 1 zeigt eine schematische Querschnittsdarstellung durch ein Kraftfahrzeug 1 in Längsrichtung, wobei in an sich bekannter Anordnung eine Windschutzscheibe 2 und ein Armaturenbrett 3 vorgesehen ist. Das Armaturenbrett 3 ist in herkömmlicher Weise unterhalb der Windschutzscheibe 2 angeordnet und schließt sich an der unteren Kante 21 der Windschutzscheibe an, so dass es sich in den Innenraum 4 des Kraftfahrzeugs 1 erstreckt. Das Armaturenbrett 3 weist eine im Wesentlichen horizontale Oberfläche 31 auf, die sich im Wesentlichen über die gesamte Breite des Kraftfahrzeugs 1 erstreckt.

Insbesondere zwischen einem Lenkrad 5 und der Windschutzscheibe 3 sind ein oder mehrere Anzeigeelemente 61 einer Anzeigeeinrichtung 6 auf der Oberseite 31 des Armaturenbretts 3 angeordnet. Die Anordnung ist im Wesentlichen horizontal mit dem Anzeigebild nach oben gerichtet. Somit kann ein Fahrer das Anzeigebild der Anzeigeeinrichtung 6 durch Reflexion an einem Reflexionsbereich 21 der schräg dem Fahrer zugeneigten Windschutzscheibe 2 erkennen, wobei das dargestellte reflektierte Anzeigebild die sich außerhalb des Fahrzeugs befindliche Umgebung, die der Fahrer durch den Reflexionsbereich 21 der Windschutzscheibe 2 wahrnimmt, überlagert.

Die Anzeigeelemente 61 der Anzeigeeinrichtung 6 sind selbstleuchtend und als Mikro-LED-Anzeigeeinrichtungen ausgebildet, die durch Feldanordnung von einzeln ansteuerbaren Mikro-LED-Elementen aufgebaut sind. Diese weisen eine hohe Leuchtkraft auf, so dass ein Anzeigebild darstellbar ist, das trotz hoher Umgebungshelligkeit durch Reflexion an dem Reflexionsbereich 21 von einem Fahrer wahrnehmbar ist.

Die Anzeigeeinrichtung 6 wird durch eine Steuereinheit 7 angesteuert, so dass die Anzeigebilder über die einzelnen Anzeigeelemente 61 darstellbar sind. Insbesondere kann die Steuereinheit 7 ausgebildet sein, je nach Bedarf die einzelnen Anzeigeelemente 61 zu aktivieren oder zu deaktivieren, so dass eine bedarfsgerechte Anzeige von Anzeigebildern erfolgen kann. Insbesondere kann die Steuereinheit 7, die Helligkeit der Mikro-LED-Anzeige von der Umgebungshelligkeit abhängig eingestellt werden, um eine Sichtbarkeit des reflektierten Anzeigebilds bei hoher Umgebungshelligkeit zu ermöglichen und ein Blenden des Fahrers bei niedrigerer Umgebungshelligkeit zu vermeiden.

Figur 2 zeigt eine flächige Anordnung von mehreren Anzeigeelementen 61 der Anzeigeeinrichtung 6, die über die Breite des Kraftfahrzeugs 1 nebeneinander, insbesondere aneinander angrenzend, angeordnet sind und es ermöglicht, das reflektierte Anzeigebild möglichst in einem unteren Bereich der Windschutzscheibe 2 darzustellen. Aufgrund der Krümmung der Windschutzscheibe 2 in horizontaler Richtung würde das reflektierte Anzeigebild in einem Mittenbereich M der Windschutzscheibe 2 höher über dem unteren Rand 22 der Windschutzscheibe 2 erscheinen als dies in einem seitlichen Bereich S der Fall ist. Daher ist vorgesehen, eine Kachelanordnung der Anzeigeelemente 61 vorzusehen, wobei die Anzeigeelemente 61 eine geringere Breite aufweisen, so dass diese jeweils mit einer Ecke an einem unteren Rand 22 der Windschutzscheibe 2 anliegen oder mit definierten gleichen Abständen dazu angeordnet sind.

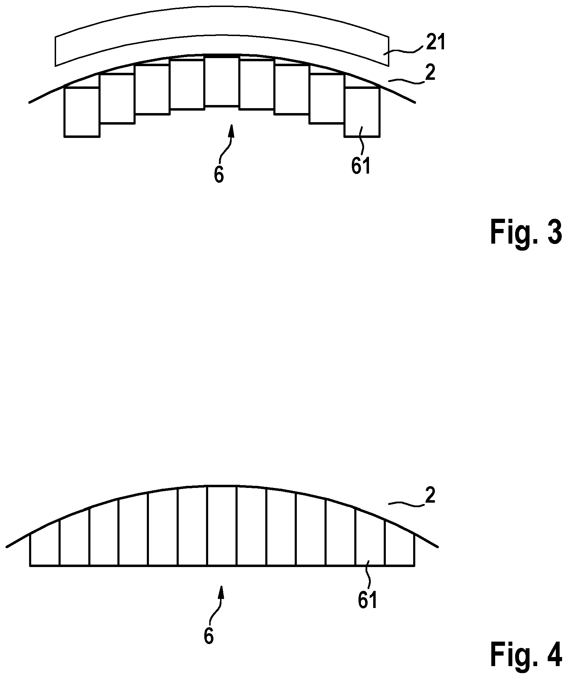

Somit kann die Anzeigeeinrichtung 6 angeordnet werden, um möglichst eine Anzeige in einem unteren Bereich der Windschutzscheibe 2 über die gesamte Breite oder über einen großen Breitenbereich der Windschutzscheibe 2 zu ermöglichen. Bei einer Nutzung der Anzeigeelemente 61 zur Darstellung eines Anzeigebildes führt dies zu einem gestuften unteren Rand des reflektierten Anzeigebilds. Jedoch können die einzelnen Anzeigeelemente 61 so angesteuert werden, dass nahe an dem unteren Rand der Windschutzscheibe 2 befindliche Bereiche nicht aktiviert werden, so dass nur ein horizontales bandförmiges Anzeigebild im Reflexionsbereich reflektiert wird, wie in der Draufsicht der Figur 3 dargestellt.

Alternativ kann, wie in der Draufsicht der Figur 4 dargestellt, vorgesehen sein, die Anzeigeelemente 61 anstelle einer rechteckigen Form mit einer zum unteren Rand der Windschutzscheibe 2 zugewandten konturierten Form zu versehen, die es ermöglicht, die Anzeigeelemente 61 mit dem jeweils konturierten Rand an der Windschutzscheibe 2 anliegen zu lassen. Dies ermöglicht zum einen eine vollständige Nutzung der Anzeigen der Anzeigeelemente 61 und zum anderen das Vermeiden eines gestuften unteren Randes des reflektierten Anzeigebilds.

Durch die Verwendung von mehreren Anzeigeelementen 61 können diese selektiv betrieben werden, so dass je nach anzuzeigender Information nur die fahrerseitigen Anzeigeelemente 61 aktiv sind, und/oder die beifahrerseitigen Anzeigeelemente 61. Die Tiefe, mit der sich die Anzeigeeinrichtung 6 über die Breite des Kraftfahrzeugs 1 erstreckt, bestimmt die Höhe des reflektierten Anzeigebildes, wobei die Tiefe der Anzeigeelemente 61 auch entlang der Breitenrichtung des Kraftfahrzeugs 1 variabel vorgegeben sein kann, so dass insbesondere fahrerseitig ein höheres reflektiertes Anzeigebild darstellbar ist, als dies auf der Beifahrerseite der Fall ist.

## Patentansprüche

1. Anzeigesystem für ein Kraftfahrzeug mit einer Anzeigeeinrichtung (6) mit mehreren Anzeigeelementen (61), die auf einer Oberseite (31) eines Armaturenbretts (3) angeordnet sind, so dass ein Anzeigebild an einem Reflexionsbereich (21) in einen Augenbereich eines Fahrers und/oder eines weiteren Fahrzeuginsassen reflektiert wird, **dadurch gekennzeichnet, dass** die mehreren Anzeigeelemente (61) als Mikro-LED-Anzeigeeinrichtungen ausgebildet sind, die durch Feldanordnung von einzeln ansteuerbaren Mikro-LED-Elementen aufgebaut sind,
wobei die Anzeigeelemente (61) aneinander angrenzend über zumindest einen Teilbereich der Breite des Armaturenbretts (3) angeordnet sind,
wobei die Anzeigeelemente (61) an eine untere Kante der Windschutzscheibe (2) angrenzen, wobei die Anzeigeelemente (61) eine rechteckige Fläche aufweisen, so dass jedes der Anzeigeelemente (61) mit mindestens einer Ecke an der Windschutzscheibe (2) angrenzen oder gleichermaßen von dieser beabstandet sind,
wobei eine Steuereinheit (7) ausgebildet ist, die Helligkeit der Anzeige der Anzeigeelemente (61) individuell abhängig von einer Umgebungshelligkeit eines Ausschnitts der Fahrzeugumgebung einzustellen, so dass die Wahrnehmung der Anzeige jedes der Anzeigeelemente (61), die den entsprechenden Ausschnitt der Fahrzeugumgebung überlagert, möglich ist.

2. Anzeigesystem nach Anspruch 1, wobei eine Steuereinheit (7) ausgebildet ist, die Anzeige der Anzeigeelemente (61) so zu formen, dass das reflektierte Anzeigebild auf der Windschutzscheibe (2) mit einem geradlinigen unteren Rand dargestellt wird.

3. Anzeigesystem nach einem der Ansprüche 1 bis 2, wobei eine Steuereinheit (7) ausgebildet ist, die Anzeigeelemente (61) selektiv zu aktivieren.

## Claims

1. Display system for a motor vehicle having a display device (6) with multiple display elements (61) arranged on a top side (31) of a dashboard (3) so that a display image is reflected from a reflection region (21) into an eye region of a driver and/or another vehicle occupant, **characterized in that** the multiple display elements (61) are in the form of micro-LED display devices set up by field arrangement of individually actuatable micro-LED elements,
wherein the display elements (61) are arranged adjacently to one another over at least a subregion of the width of the dashboard (3),
wherein the display elements (61) adjoin a lower edge of the windscreen (2), wherein the display elements (61) have a rectangular surface area, which means that each of the display elements (61) has at least one corner adjoining the windscreen (2) or at an equal distance therefrom,
wherein a control unit (7) is designed to adjust the brightness of the display by the display elements (61) individually on the basis of an ambient brightness of a portion of the vehicle surroundings so that it is possible to see the display, by each of the display elements (61), that overlaps the relevant portion of the vehicle surroundings.

2. Display system according to Claim 1, wherein a control unit (7) is designed to shape the display by the display elements (61) such that the reflected display image is presented on the windscreen (2) with a straight lower border.

3. Display system according to either of Claims 1 and 2, wherein a control unit (7) is designed to selectively activate the display elements (61).

## Revendications

1. Système d'affichage pour un véhicule automobile comprenant un dispositif d'affichage (6) comprenant une pluralité d'éléments d'affichage (61) qui sont agencés sur une face supérieure (31) d'un tableau de bord (3), de sorte qu'une image d'affichage est réfléchie au niveau d'une zone de réflexion (21) dans une zone des yeux d'un conducteur et/ou d'un autre occupant du véhicule, **caractérisé en ce que** la pluralité d'éléments d'affichage (61) sont conçus sous la forme de dispositifs d'affichage à micro-LED qui sont constitués par un agencement de champ d'éléments à micro-LED aptes à être commandés individuellement,
les éléments d'affichage (61) étant agencés de manière adjacente les uns aux autres sur au moins une partie de la largeur du tableau de bord (3),
les éléments d'affichage (61) étant adjacents à un bord inférieur du pare-brise (2), les éléments d'affichage (61) présentant une surface rectangulaire, de sorte que chacun des éléments d'affichage (61) est adjacent au pare-brise (2) par au moins un coin ou est espacé de celui-ci de la même manière,
une unité de commande (7) étant conçue pour régler individuellement la luminosité de l'affichage des éléments d'affichage (61) en fonction d'une luminosité ambiante d'une section de l'environnement du véhicule, de sorte que la perception de l'affichage de chacun des éléments d'affichage (61), qui se superpose à la section correspondante de l'environnement du véhicule, est possible.

2. Système d'affichage selon la revendication 1, dans lequel une unité de commande (7) est conçue pour mettre en forme l'affichage des éléments d'affichage (61) de manière que l'image d'affichage réfléchie soit représentée sur le pare-brise (2) avec un bord inférieur rectiligne.

3. Système d'affichage selon l'une des revendications 1 à 2, dans lequel une unité de commande (7) est configurée pour activer sélectivement les éléments d'affichage (61).
